# EUROPEAN PATENT SPECIFICATION

(11) **EP 3 697 033 B1**
(45) Date of publication and mention of the grant of the patent: **19.04.2023**
(21) Application number: 19219489.2
(22) Date of filing: 24.06.2008
(51) Int. Cl.: H04L 45/02

(54) **METHOD AND DEVICE FOR FORWARDING INFORMATION**
VERFAHREN UND VORRICHTUNG ZUR WEITERLEITUNG VON INFORMATIONEN
PROCÉDÉ ET DISPOSITIF DE TRANSFERT D'INFORMATIONS

(30) Priority: 05.07.2007 CN 200710029040
(43) Date of publication of application: 19.08.2020
(62) Divisional of application: 16165904.0
(73) Proprietor: Huawei Technologies Co., Ltd., Shenzhen, Guangdong 518129 (CN)
(72) Inventor: XU, Xiaohu, Shenzhen, Guangdong 518129 (CN); GUO, Dayong, Shenzhen, Guangdong 518129 (CN)
(74) Representative: Pfenning, Meinig & Partner mbB

(56) References cited:
- US-A1- 2003 031 192
- US-A1- 2005 105 519
- US-A1- 2007 058 568

## Description

### Field of the Invention

The present invention relates to the field of communications, and in particular to a method and device for forwarding information.

### Background

Routing is a behavior that delivers information from a source to a destination. A routing behavior usually includes two basic actions: determining a best route and exchanging data. Metric is a measurement, such as bandwidth or path cost, used by a routing algorithm to determine the best route to the destination. To help select a route, a routing algorithm initializes and maintains a routing table that includes routing information, where routing information varies with the routing algorithm in use. To notify a router of a destination or next hop address, the best approach is to send packets to a router that represents the next hop. When the router receives a packet, the router checks the destination address and attempts to associate the address with its next hop. A routing table includes multiple types of information including distance information, hop count information and information of the next hop address. Metrics vary with the routing algorithm in use. The routing table compares the metrics to determine the best route. A router communicates with other routers to maintain its routing table by exchanging routing information. Routing update information usually concerns all or part of the routing tables. The router builds a network topology map by analyzing routing update information from other routers. Another example of information exchange between routers is the exchange of link state advertisements. A router notifies other routers of the link state information of the router by sending an advertisement. The link state information is used for building a complete topology map so that the router can determine the best route.

Multi-homing (Multi-homing) is a technique where a link set of more than one link (owned by one operator or different operators) between an end user and a network for connectivity or load balance purposes. In fact, Traffic Engineering (Traffic Engineering) is a set of tools and methods, which can get the best service from given infrastructure no matter whether a network device or a transport line works normally or fails. This requires optimization of the installed resources. With the wide deployment of multi-homing and Traffic Engineering systems, the quantity of Internet (Internet) routes increases rapidly. As a result, on the one hand, because larger capacity chips are needed to store larger routing tables, the cost of routers devices is growing; on the other hand, route convergence becomes slower, which hinders system response and affects efficiency of the entire system.

When implementing the present invention, the inventor of the invention had the following findings: because a routing table in the prior art includes specific routes to target subnets, when the quantity of Internet routes increases rapidly, corresponding routing information has to be added in routers in the Transit Network (Transit Network, TN) and the Edge Network (Edge Network, EN), so that the size of a routing table also increases rapidly. As a result, the cost for devices to store routing tables rises and route convergence becomes slower. The efficiency of the entire system is therefore low. US Patent Application Publication No. 2005/0105519 discloses a method for providing managed IP routing services for layer-2 (L2) overlay IP VPNs.

US2003/0031192 A1 discloses an edge device which is disposed at an entrance of a MPLS domain. The edge device, when receives a packet attached with a local label from a communication device of users side, extracts a destination label corresponding to the local label from a label learning table, rewrites the local label in the packet with the extracted label, and transmits the packet to a neigh-boring LSR corresponding to the extracted label within the MPLS domain.

### Summary

The present invention is defined in the attached claims.

To solve the foregoing technical issue, an embodiment of the invention provides a method applied by a first border router, BR, in a network comprising a first edge network, EN and a second EN, wherein the first BR locates in the first EN, a second BR locates in the second EN, and a registration agent, RA, locates in the TN, the method comprises:
obtaining (s203), by the first BR, a first Internet Protocol, IP, packet from the first EN, wherein the first IP packet comprises a destination IP address corresponding to the second EN;
sending (s205), by the first BR, to the RA, BR query information that carries the destination IP address included in the first IP packet; and
receiving (s206), by the first BR, BR information of the second BR in response to the BR query information, wherein the second BR corresponds to the destination IP address, wherein the BR information of the second BR is obtained according to a mapping between IP prefix information of the second EN and the second BR.

Accordingly, an embodiment of the present invention provides a device applied by a first border router, BR, in a network comprising a first edge network, EN and a second EN, wherein the first BR locates in the first EN, a second BR locates in the second EN, and a registration agent, RA, locates in the TN, the device comprises:
an obtaining unit, configured to obtain a first Internet Protocol, IP, packet from the first EN, wherein the first IP packet comprises a destination IP address corresponding to the second EN;
a sending unit, configured to send, to the RA, BR query information that carries the destination IP address included in the first IP packet;
a receiving unit, configured to receive BR information of the second BR in response to the BR query information, wherein the second BR corresponds to the destination IP address, wherein the BR information of the second BR is obtained according to a mapping between IP prefix information of the second EN and the second BR.

According to embodiments of the present invention, upon receiving IP packet, the first BR sends BR query information that carries the destination IP address of the received IP packet. Besides, BR information of the second BR in response to the BR query information is received by the first BR. Only RA needs to store routing information while the first BR does not have to locally pre-store routing information of the received IP packet. This can reduce the cost of storing routing table in border router of edge network and accelerate the speed of route convergence.

### Brief Description of the Drawings

FIG. 1 shows a network structure of the Internet in a prior art;
FIG. 2 shows an information forwarding method according to a first embodiment of the invention;
FIG. 3 shows an information forwarding method according to a second embodiment of the invention;
FIG. 4 shows an information forwarding device according to a first embodiment of the invention; and
FIG. 5 shows an information forwarding device according to a second embodiment of the invention.

### Detailed Description of the Invention

Embodiments of the invention provide an information forwarding method and an information forwarding device. When Internet routes increase rapidly, a routing device in a TN only needs to find a border routing device in a corresponding destination edge network according to route indicator information so as to forward information in the TN, without the need to add routing table entries in the TN in accordance with the EN routing table entries. Thereby, the cost of routing table storage devices in the entire network is reduced, the route convergence is quicker in the entire network, and the work efficiency of the entire network is higher.

The embodiments of the present invention are hereinafter described in detail with reference to the accompanying drawings.

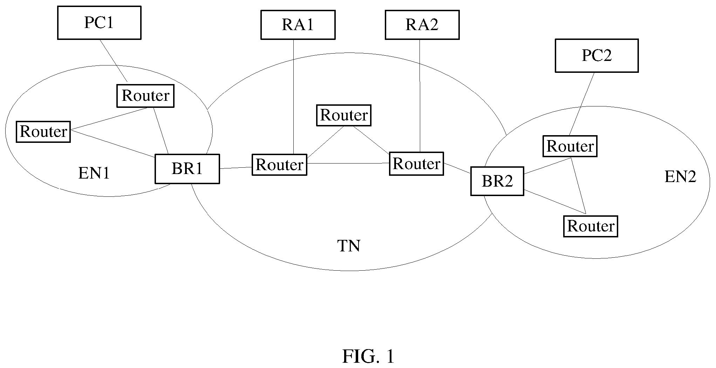

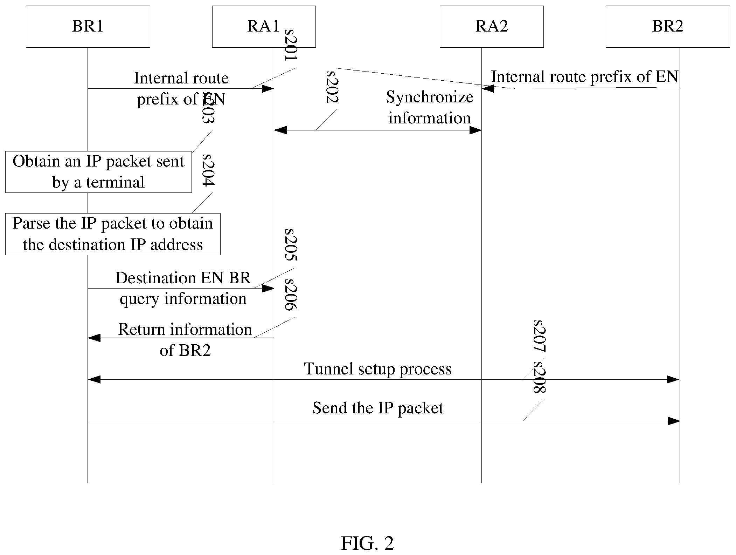

FIG. 2 shows an information forwarding method according to a first embodiment of the invention. The method is based on the Internet structure in a prior art shown in FIG. 1. The Internet includes edge network EN1, edge network EN2 and a transmit network TN, where an EN includes Personal Computers (Personal Computers, PCs) and Border Routers (BRs) and the TN includes a Registration Agent (Registration Agent, RA) and the Border Routers, where the border routers are shared by the TN and the ENs. The EN and TN also include other routing devices. The method is described in detail as follows.

As shown in FIG. 2, the information forwarding method includes:
s201. A BR registers internal route prefix (Prefix) information of a EN to which the BR connects in a proximate RA. For example, BR1 registers an internal prefix (such as 20.1.1.0/24) of EN1 in the proximate RA1 and BR2 registers an internal prefix (such as 10.1.1.0/24) in the proximate RA2 to create a mapping table between the prefix and the BR that registers the prefix. BR1 is mapped to 20.1.1.0/24 and BR2 is mapped to 10.1.1.0/24. The proximate RA is associated via the Anycast mechanism.
s202. The mapping tables of RA1 and RA2 in the TN are synchronized. Specifically, RA1 and RA2 notify each other of the respectively received mapping information via a protocol. For example, the Border Gateway Protocol (BGP) is adopted to synchronize the mapping tables. A full-meshed BGP connection may be established between RA1 and RA2 or a Router Reflector (RR) may be adopted to implement the connection, or an independent protocol may be defined to realize the above synchronization purpose.

After the registration process in s201 and the synchronization process in s202, the following information forwarding process continues:
s203. BR1 obtains a to-be-forwarded IP packet sent by PC1 in EN1, where the IP packet is forwarded in EN1 to BR1 of EN1 hop by hop according to the routing method in the prior art.
s204. BR1 parses the obtained IP packet and obtains the destination IP address in the IP packet, for example, the destination IP address of the IP packet is 10.1.1.2.
s205. Via a tunnel destined for an RA Anycast address, BR1 sends a BR query information that carries the destination IP address to RA1 and waits for RA1 to provide BR information of a destination EN corresponding to the destination IP address.
s206. RA1 queries the synchronized mapping table and obtains BR information of a destination EN corresponding to the destination IP address carried in the BR query information and returns the BR information to BR1. For example, when the registered prefix with the longest match with 10.1.1.2 is 10.1.1.0/24 and the BR corresponding to the prefix is BR2, RA1 returns the BR2 information to BR1.
s207. A communication tunnel is set up between BR1 and BR2. The communication tunnel may be a Multi-Protocol Label Switching (Multi-Protocol Label Switching, MPLS) tunnel or an Internet Protocol packet encapsulated in Internet Protocol packet (IPinIP) tunnel, or a Generic Routing Encapsulation (General Router Encapsulation, GRE) tunnel.
s208. BR1 sends an IP packet to BR2 via the tunnel established in s207 and BR2 forwards the IP packet to the destination terminal.

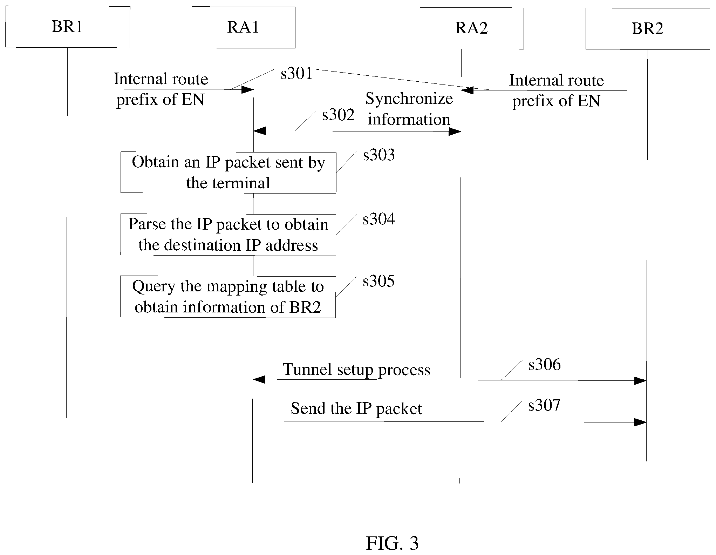

FIG. 3 shows an information forwarding method according to a second embodiment of the invention. The method is also based on the Internet structure shown in FIG. 1. The information forwarding method includes:
s301. A BR registers internal route prefix information of an EN to which the BR connects in a proximate RA. For example, BR1 registers an internal prefix (such as 20.1.1.0/24) of EN1 in the proximate RA1 and BR2 registers an internal prefix (such as 10.1.1.0/24) in the proximate RA2 to create a mapping table between the prefix and the BR that registers the prefix. BR1 is mapped to 20.1.1.0/24 and BR2 is mapped to 10.1.1.0/24. The proximate RA is associated via the Anycast mechanism.
s302. The mapping tables of RA1 and RA2 in the TN are synchronized. Specifically, RA1 and RA2 notify each other of the respectively received mapping information via a protocol. For example, the Border Gateway Protocol (Border Gateway Protocol, BGP) is adopted to synchronize the mapping tables. A full-meshed (Full-meshed) BGP connection may be established between RA1 and RA2 or a Router Reflector (Router Reflector, RR) may be adopted to implement the connection, or an independent protocol may be defined to realize the above synchronization purpose.

After the registration process in s301 and the synchronization process in s302, the following information forwarding process continues:
s303. RA1 obtains a to-be-forwarded IP packet sent by PC1 in EN1. The IP packet is forwarded to BR1 in EN1 hop by hop according to the routing method in the prior art. When BR1 receives the IP packet, BR1 sends the packet to RA1 via a tunnel destined for the RA Anycast address.
s304. RA1 parses the obtained IP packet and obtains the destination IP address in the IP packet, for example, the destination IP address of the IP packet is 10.1.1.2.
s305. RA1 queries the synchronized mapping table and obtains BR information mapped to the prefix with the longest match with the destination IP address. For example, the registered prefix with the longest match with 10.1.1.2 is 10.1.1.0/24 and the BR corresponding to the prefix is BR2.
s306. A communication tunnel is set up between RA1 and BR2. The communication tunnel may be an MPLS tunnel, or an IPinIP tunnel, or a GRE tunnel.
s307. RA1 sends an IP packet to BR2 via the tunnel established in s306 and BR2 forwards the IP packet to the destination terminal.

In addition, based on the Internet network structure shown in FIG. 1, an information forwarding method in another embodiment of the invention may be as follows:

Indication information indicating BR2 in the destination EN2 is adopted and carried in a to-be-forwarded IP packet sent by PC1 in EN1. When BR1 receives the IP packet, BR1 may extract the indication information in the IP packet and set up a communication tunnel between BR1 and BR2 according to BR2 indicated by the indication information. Then, BR1 forwards an IP packet to BR2 via the communication tunnel.

Accordingly, the following describes an information forwarding device provided in embodiments of the invention.

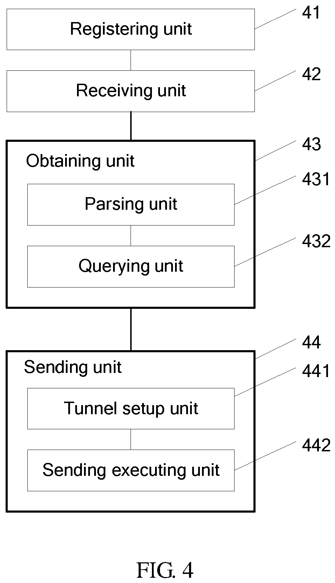

FIG. 4 shows an information forwarding device provided according to a first embodiment of the invention. Specifically, the information forwarding device is a BR. Specially the BR includes: a registering unit 41, a receiving unit 42, an obtaining unit 43 and a sending unit 44. The obtaining unit 43 includes a parsing unit 431 and a querying unit 432. The sending unit 44 includes a tunnel setup unit 441 and a sending executing unit 442. The connection between the units and their functions are described as follows:

The registering unit 41 is coupled to the receiving unit 42. The receiving unit 42 and the sending unit 44 are coupled to the obtaining unit 43, respectively. The parsing unit 431 is coupled to the querying unit 432. The tunnel setup unit 441 is coupled to the sending executing unit 442.

The registering unit 41 may send registration information to a proximate RA in a TN coupled with the BR. The registration information is internal prefix information of the EN. For example, when the BR wants to register an internal prefix (20.1.1.0/24) of the EN in a proximate RA, the registering unit 41 sends registration information that carries the prefix 20.1.1.0/24 to the RA and instructs the RA to create a mapping table between the prefix 20.1.1.0/24 and the BR that registers the prefix so that the BR and 20.1.1.0/24 are mapped. The proximate RA is associated via the Anycast mechanism. It should be understood that the mapping tables registered on all RAs may be synchronized via a protocol, such as BGP. A full-meshed BGP connection is established, or a connection is established via an RR, or an independent protocol may be defined to realize the synchronization of mapping tables.

The receiving unit 42 receives a to-be-forwarded IP packet sent by a PC in the EN after the registering unit 41 completes the registration.

The parsing unit 431 parses the IP packet received by the receiving unit 42 and obtains a destination IP address in the IP packet, for example, the destination IP address of the IP packet is 10.1.1.2.

The querying unit 432 sends BR query information that carries the destination IP address to the RA that stores the registered and synchronized mapping table and obtains the required BR information in the destination EN. The RA may look up the BR information in the destination EN mapped to the prefix by obtaining a registered prefix with the longest match with the destination IP address.

The tunnel setup unit 441 sets up a communication tunnel between the BR and the BR in the destination EN. The communication tunnel may be an MPLS tunnel, or an IPinIP tunnel, or a GRE tunnel.

The sending executing unit 442 sends an IP packet to the BR in the destination EN via the tunnel established by the tunnel setup unit 441 and the BR in the destination EN forwards the IP packet to the destination terminal.

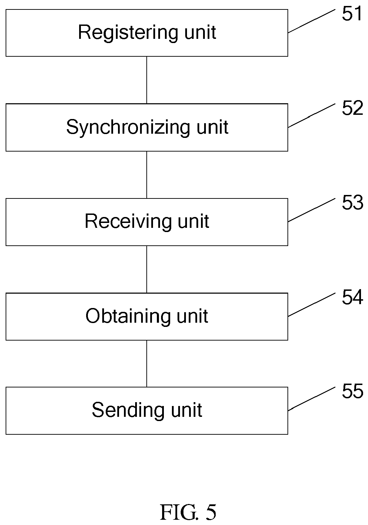

FIG. 5 shows an information forwarding device provided according to another embodiment of the invention. The information forwarding device is specifically an RA and the RA mainly includes a registering unit 51, a synchronizing unit 52, a receiving unit 53, an obtaining unit 54 and a sending unit 55. The connections between the units and their functions are as follows:
The registering unit 51 is coupled to the synchronizing unit 52. The synchronizing unit 52 is coupled to the receiving unit 53. The receiving unit 53 and the sending unit 55 are coupled to the obtaining unit 54 respectively.

The registering unit 51 may create a mapping table between a prefix and the BR that registers the prefix according to registration information carrying the prefix sent by the BR. For example, when the BR registers the internal prefix (20.1.1.0/24) of the EN in a proximate RA, the registering unit 51 creates a mapping between the prefix 20.1.1.0/24 and the BR that registers the prefix after receiving the registration information that carries the prefix 20.1.1.0/24 so that the BR and 20.1.1.0/24 are mapped. The proximate RA is associated via the Anycast mechanism.

The synchronizing unit 52 synchronizes mapping information registered in all RAs via a protocol. Specifically, the synchronizing unit 52 may set up a full-meshed BGP connection, or establish a connection via an RR, or adopt an independently defined protocol to realize the synchronization.

After the registering unit 51 and the synchronizing unit 52 complete their respective processing, the receiving unit 53 receives a to-be-forwarded IP packet sent by a PC in the EN. In the EN where the PC locates, the IP packet is forwarded to the BR in the EN hop by hop according to the routing method in the prior art. Upon reception of the IP packet, the BR sends the IP packet to the receiving unit 53 via a tunnel between the BR and the RA.

The obtaining unit 54 parses the received IP packet and obtains the destination IP address of the IP packet. For example, when the destination IP address of the IP packet is 10.1.1.2, a prefix with the longest match with the destination IP address is 10.1.1.0/24. The obtaining unit 54 also queries the mapping table synchronized by the synchronizing unit 52 to obtain BR information of the destination EN mapped to the prefix.

The sending unit 55 sets up a communication tunnel between the RA and the BR in the destination EN. The communication tunnel may be an MPLS tunnel, or an IPinIP tunnel, or a GRE tunnel. The sending unit 55 also sends an IP packet to the BR in the destination EN via the communication tunnel and the BR in the destination EN forwards the IP packet to the destination terminal.

It should be understood that the Anycast mechanism for associating the proximate RA with a BR is Anycast Rendezvous Point (Rendezvous Point, RP) defined both in Internet Protocol version 6 (IPv6) and Protocol Independent Multicast-Sparse Mode (Protocol Independent Multicast-Sparse Mode, PIM-SM). Specifically, all RAs use one IP address when providing the mapping query and information forwarding service. Thereby, mapping registration and information query messages sent by the BR to an RA are destined for this IP address. When an RA needs to provide the information forwarding service, the tunnel between the BR and the RA uses this IP address. Besides, according to the principle of shortest path forwarding, the registration message and query message and information to be forwarded by the RA will all be routed to a proximate RA. However, when the mapping tables are synchronized between RAs, each RA uses a different IP address.

With the embodiments of the invention, when Internet routes increase rapidly, only the RA in a TN needs to maintain all routing information (including routing information in the EN) on the Internet while other routers in the TN only need to maintain routing information in the TN. A host in the EN for which data information is destined can be obtained by querying the RA or the data information can be forwarded to the destination host by the RA. This can cut the cost of routing table storage devices in the entire network, increase the speed of route convergence in the network and improve the efficiency of the entire system.

Although the invention has been described through exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the claims or their equivalents.

## Claims

1. A method applied by a first border router, BR, in a network comprising a first edge network, EN, a transit network, TN, and a second EN, wherein the first BR locates in the first EN, a second BR locates in the second EN, and a registration agent, RA, locates in the TN, the method comprises:
obtaining (s203), by the first BR, a first Internet Protocol, IP, packet from the first EN, wherein the first IP packet comprises a destination IP address corresponding to the second EN;
**characterized by**:
sending (s205), by the first BR, to the RA, BR query information that carries the destination IP address included in the first IP packet; and
receiving (s206), by the first BR, from the RA, BR information of the second BR in response to the BR query information, wherein the second BR corresponds to the destination IP address, wherein the BR information of the second BR is obtained according to a mapping between IP prefix information of the second EN and the second BR.

2. The method of claim 1, wherein the sending (s205), by the first BR, BR query information that carries the destination IP address included in the first IP packet comprises:
sending (s205), by the first BR, the BR query information via a tunnel destined for a registration agent, RA, anycast address.

3. The method of claim 1 or claim 2, further comprising:
registering (s201), by the first BR, internal route prefix information of the first EN in the RA.

4. The method of claim 3, wherein the registering (s201), by the first BR, internal route prefix information of the first EN in an RA comprises:
registering (s201), by the first BR, the internal route prefix information to an proximate RA via anycast mechanism.

5. A first border router, BR, in a network comprising a first edge network, EN, a transit network, TN, and a second EN, wherein the first BR locates in the first EN, a second BR locates in the second EN, and a registration agent, RA, locates in the TN, wherein the first BR is configured to:
obtain a first Internet Protocol, IP, packet from the first EN, the first IP packet comprising a destination IP address corresponding to the second EN;
**characterized by**: being further configured to send, to the RA, BR query information that carries the destination IP address; and
receive, from the RA, BR information of the second BR in response to the BR query information,
wherein the second BR corresponds to the destination IP address, wherein the BR information of the second BR is obtained according to a mapping between IP prefix information of the second EN and the second BR.

6. The first BR of claim 5 is configured to:
send the BR query information via a tunnel destined for a registration agent, RA, anycast address.

7. The first BR of claim 5 or claim 6 is further configured to:
register internal route prefix information of the first EN in the RA.

8. The first BR of claim 7, the first BR is configured to register the internal route prefix information to a proximate RA via anycast mechanism.

9. A system comprising a first border router, BR, of any one claims 5-8 and a second BR.

## Patentansprüche

1. Verfahren, angewendet durch einen ersten Grenzrouter, BR, in einem Netzwerk, das ein erstes Edge-Netzwerk, EN, ein Transitnetzwerk, TN, und ein zweites EN umfasst, wobei der erste BR in dem ersten EN lokalisiert, ein zweiter BR in dem zweiten EN lokalisiert und ein Registrierungsagent, RA, in dem TN lokalisiert, wobei das Verfahren Folgendes umfasst:
Erhalten (s203), durch den ersten BR, eines ersten Internetprotokoll- bzw. IP-Pakets von dem ersten EN, wobei das erste IP-Paket eine dem zweiten EN entsprechende Ziel-IP-Adresse umfasst;
**gekennzeichnet durch**:
Senden (s205), durch den ersten BR an den RA, von BR-Abfrageinformationen, die die in dem ersten IP-Paket enthaltene Ziel-IP-Adresse führen; und
Empfangen (s206), durch den ersten BR von dem RA, von BR-Informationen des zweiten BR als Reaktion auf die BR-Abfrageinformationen, wobei der zweite BR der Ziel-IP-Adresse entspricht, wobei die BR-Informationen des zweiten BR gemäß einer Abbildung zwischen IP-Präfixinformationen des zweiten EN und des zweiten BR erhalten werden.

2. Verfahren nach Anspruch 1, wobei das Senden (s205), durch den ersten BR, von BR-Abfrageinformationen, die die in dem ersten IP-Paket enthaltene Ziel-IP-Adresse führen, Folgendes umfasst:
Senden (s205), durch den ersten BR, der BR-Abfrageinformationen über einen für eine Registrierungsagenten- bzw. RA-"Anycast"-Adresse vorgesehenen Tunnel.

3. Verfahren nach Anspruch 1 oder Anspruch 2, das ferner Folgendes umfasst:
Registrieren (s201), durch den ersten BR, von internen Routenpräfixinformationen des ersten EN in dem RA.

4. Verfahren nach Anspruch 3, wobei das Registrieren (s201), durch den ersten BR, von internen Routenpräfixinformationen des ersten EN in dem RA Folgendes umfasst:
Registrieren (s201), durch den ersten BR, der internen Routenpräfixinformationen bei einem nahegelegenen RA über einen "Anycast"-Mechanismus.

5. Erster Grenzrouter, BR, in einem Netzwerk, das ein erstes Edge-Netzwerk, EN, ein Transitnetzwerk, TN, und ein zweites EN umfasst, wobei der erste BR in dem ersten EN lokalisiert, ein zweiter BR in dem zweiten EN lokalisiert und ein Registrierungsagent, RA, in dem TN lokalisiert, wobei der erste BR zu Folgendem ausgelegt ist:
Erhalten eines ersten Internetprotokoll- bzw. IP-Pakets von dem ersten EN, wobei das erste IP-Paket eine dem zweiten EN entsprechende Ziel-IP-Adresse umfasst;
**dadurch gekennzeichnet, dass** er ferner zu Folgendem ausgelegt ist:
Senden, an den RA, von BR-Abfrageinformationen, die die in dem ersten IP-Paket enthaltene Ziel-IP-Adresse führen; und
Empfangen, von dem RA, von BR-Informationen des zweiten BR als Reaktion auf die BR-Abfrageinformationen, wobei der zweite BR der Ziel-IP-Adresse entspricht, wobei die BR-Informationen des zweiten BR gemäß einer Abbildung zwischen IP-Präfixinformationen des zweiten EN und des zweiten BR erhalten werden.

6. Erster BR nach Anspruch 5, der zu Folgendem ausgelegt ist:
Senden der BR-Abfrageinformationen über einen für eine Registrierungsagenten- bzw. RA-"Anycast"-Adresse vorgesehenen Tunnel.

7. Erster BR nach Anspruch 5 oder Anspruch 6, der ferner zu Folgendem ausgelegt ist:
Registrieren von internen Routenpräfixinformationen des ersten EN in dem RA.

8. Erster BR nach Anspruch 7, wobei der erste BR ausgelegt ist zum Registrieren der internen Routenpräfixinformationen bei einem nahegelegenen RA über einen "Anycast"-Mechanismus.

9. System, das einen ersten Grenzrouter, BR, nach einem der Ansprüche 5-8 und einen zweiten BR umfasst.

## Revendications

1. Procédé appliqué par un premier routeur de bordure, BR, dans un réseau comprenant un premier réseau de bord, EN, un réseau de transit, TN, et un second EN, le premier BR se situant dans le premier EN, un second BR se situant dans le second EN, et un agent d'enregistrement, RA, se situant dans le TN, le procédé comprenant :
l'obtention (s203), par le premier BR, d'un premier paquet de Protocole Internet, IP, à partir du premier EN, dans lequel le premier paquet IP comprend une adresse IP de destination correspondant au second EN ;
**caractérisé par** :
l'envoi (s205), par le premier BR, au RA, d'informations de requête de BR qui acheminent l'adresse IP de destination contenue dans le premier paquet IP ; et
la réception (s206), par le premier BR, en provenance du RA, d'informations de BR du second BR en réponse aux informations de requête de BR, dans lequel le second BR correspond à l'adresse IP de destination, dans lequel les informations de BR du second BR sont obtenues conformément à un mappage entre des informations de préfixe IP du second EN et du second BR.

2. Procédé selon la revendication 1, dans lequel l'envoi (s205), par le premier BR, d'informations de requête de BR qui acheminent l'adresse IP de destination contenue dans le premier paquet IP comprend :
l'envoi (s205), par le premier BR, des informations de requête de BR par l'intermédiaire d'un tunnel destiné à une adresse anycast d'agent d'enregistrement, RA.

3. Procédé selon la revendication 1 ou la revendication 2, comprenant en outre :
l'enregistrement (s201), par le premier BR, d'informations de préfixe de route interne du premier EN dans le RA.

4. Procédé selon la revendication 3, dans lequel l'enregistrement (s201), par le premier BR, d'informations de préfixe de route interne du premier EN dans un RA comprend :
l'enregistrement (s201), par le premier BR, des informations de préfixe de route interne auprès d'un RA de proximité par l'intermédiaire d'un mécanisme de type anycast.

5. Premier routeur de bordure, BR, dans un réseau comprenant un premier réseau de bord, EN, un réseau de transit, TN, et un second EN, le premier BR se situant dans le premier EN, un second BR se situant dans le second EN, et un agent d'enregistrement, RA, se situant dans le TN, le premier BR étant configuré pour :
obtenir un premier paquet de Protocole Internet, IP, à partir du premier EN, le premier paquet IP comprenant une adresse IP de destination correspondant au second EN ;
**caractérisé par** : le fait d'être en outre configuré pour
envoyer, au RA, des informations de requête de BR qui acheminent l'adresse IP de destination ; et
recevoir, en provenance du RA, des informations de BR du second BR en réponse aux informations de requête de BR, dans lequel le second BR correspond à l'adresse IP de destination, dans lequel les informations de BR du second BR sont obtenues conformément à un mappage entre des informations de préfixe IP du second EN et du second BR.

6. Premier BR selon la revendication 5, configuré pour :
envoyer les informations de requête de BR par l'intermédiaire d'un tunnel destiné à une adresse anycast d'agent d'enregistrement, RA.

7. Premier BR selon la revendication 5 ou la revendication 6, en outre configuré pour :
enregistrer des informations de préfixe de route interne du premier EN dans le RA.

8. Premier BR selon la revendication 7, le premier BR étant configuré pour enregistrer les informations de préfixe de route interne auprès d'un RA de proximité par l'intermédiaire d'un mécanisme de type anycast.

9. Système comprenant un premier routeur de bordure, BR, selon l'une quelconque des revendications 5-8 et un second BR.
